# EUROPEAN PATENT SPECIFICATION

(11) **EP 3 789 959 B1**
(45) Date of publication and mention of the grant of the patent: **05.03.2025**
(21) Application number: 20189101.7
(22) Date of filing: 03.08.2020
(51) Int. Cl.: G06T 7/00

(54) **APPEARANCE INSPECTION METHOD AND APPEARANCE INSPECTION APPARATUS**
ERSCHEIDUNGSINSPEKTIONSVERFAHREN UND ERSCHEINUNGSINSPEKTIONSVORRICHTUNG
PROCÉDÉ ET APPAREIL D'INSPECTION D'APPARENCE

(30) Priority: 06.09.2019 JP 2019163168
(43) Date of publication of application: 10.03.2021
(73) Proprietor: Sumitomo Rubber Industries, Ltd., Kobe-shi, Hyogo-ken 651-0072 (JP)
(72) Inventor: FUJIWARA, Kazuya, Kobe-shi, Hyogo 651-0072 (JP)
(74) Representative: Manitz Finsterwald Patent- und Rechtsanwaltspartnerschaft mbB

(56) References cited:
- EP-A1- 2 221 578
- EP-A1- 2 799 848
- TADA HIROTARO ET AL: "Defect Classification on Automobile Tire Inner Surfaces using Convolutional Neural Networks", 2017 INTERNATIONAL CONFERENCE ON COMPUTING, COMMUNICATION, CONTROL AND AUTOMATION (ICCUBEA), IEEE, 17 August 2017 (2017-08-17), pages 1 - 6, XP033404265, DOI: 10.1109/ICCUBEA.2017.8463768

## Description

### BACKGROUND OF THE INVENTION

### Field of the Invention

The present invention relates to a method and an apparatus for automatically inspecting the appearance of a to-be-inspected object.

### Description of the Background Art

Conventionally, various techniques for inspecting the appearance of a to-be-inspected object such as a tire have been studied (see, for example, JP 2018-105699 A).

EP 2 799 848 A1 relates to appearance inspection for tires wherein pictures are taken from the tires to be inspected and the tires are inspected with reference to a master image for detecting shape anomaly. Red illumination and blue illumination having different wave lengths from each other are directed to the surface of a rotating tire from different directions so as to overlap the cast lights with each other. Then, the surface images are taken, and the red component and the blue component are separated from each other by means of image processing, and the presence or absence of unevenness of the tire surface is determined from the ratio between the intensities of the red component and the blue component.

The publication "Defect Classification on Automobile Tire Inner Surfaces using Convolutional Neural Networks" of Tada Hirotaro et al., 2017 International Conference on Computing, Communication, Control and Automation (ICCUBEA), IEEE, 17 August 2017, pages 1 to 6, XP33404265, DOI: 10.1109/ICCUBEA.2017.8463768, discusses a method of classifying defects and non-defectives generated on background patterns on an inner tire surface using data obtained by imaging the entire inner tire surface. In this regard, a method of imaging and a method of image creation, particularly the generation of 3D shape images, are being discussed. Then, based on the image, it is detected whether or not defects are present, and the objects/tires are classified as good parts, quasi-good parts and defective parts.

EP 2 221 578 A1 refers to a method in which acceptability of shape of a tire surface is determined by comparing an image against a reference image.

In the appearance inspection, further improvement in inspection accuracy is expected.

The present invention has been made in view of the above circumstances, and a main object of the present invention is to provide an appearance inspection method and an appearance inspection apparatus that are capable of detecting an appearance defect with high accuracy.

### SUMMARY OF THE INVENTION

A first aspect of the present invention is directed to a method for inspecting appearance of a to-be-inspected object, the appearance inspection method being executed using an appearance inspection apparatus and including: an imaging step of imaging a plurality of the to-be-inspected objects using a camera of an imaging unit and acquiring images thereof; a first sorting step of sorting the images as non-defective product estimation images within a predetermined standard and defective product estimation images outside the standard by using an algorithm of one class learning, the first sorting step being executed using a processing unit of a computer device; and a second sorting step of detecting a defective product from the to-be-inspected objects by extracting features of defects from the defective product estimation images using an algorithm of object detection, and searching the images for the features by comparing the image data acquired in the imaging step with the features of the defects from the defective product estimation images sorted in the first sorting step, the second sorting step being executed using the processing unit.

In the appearance inspection method according to the present invention, in the second sorting step, the features are preferably classified and accumulated for each of types of the defects.

In the appearance inspection method according to the present invention, in the second sorting step, the feature extracted from the image of the to-be-inspected object detected as the defective product in the second sorting step after being sorted as the non-defective product estimation image in the first sorting step is preferably accumulated.

In the appearance inspection method according to the present invention, the to-be-inspected objects are preferably tires.

In the appearance inspection method according to the present invention, an annular imaging area at a sidewall portion is preferably imaged in the imaging step.

In the appearance inspection method according to the present invention, the imaging area is preferably converted into a band shape in the imaging step.

A second aspect of the present invention is directed to an appearance inspection apparatus for inspecting appearance of a to-be-inspected object, the appearance inspection apparatus including: an imaging unit configured to image a plurality of the to-be-inspected objects and acquire images thereof; a storage unit configured to store the images; a first sorting unit configured to sort the images as non-defective product estimation images within a predetermined standard and defective product estimation images outside the standard by using an algorithm of one class learning; and a second sorting unit configured to detect a defective product from the to-be-inspected objects by extracting features of defects from the defective product estimation images using an algorithm of object detection, and searching the images for the features by comparing the image data acquired by the imaging unit with the features of the defects from the defective product estimation images sorted by the first sorting unit.

In the appearance inspection apparatus according to the present invention, preferably, the second sorting unit classifies the features by types of the defects, and the storage unit accumulates the features for each of the types.

In the appearance inspection apparatus according to the present invention, the imaging unit preferably includes a 2D camera.

In the appearance inspection apparatus according to the present invention, the imaging unit preferably includes a 3D camera.

The appearance inspection method according to the first aspect includes the first sorting step using the algorithm of the one class learning, and the second sorting step using the algorithm of the object detection. In the first sorting step, each of the images acquired in the imaging step is sorted as the non-defective product estimation image or the defective product estimation image. In the second sorting step, the features of the defects are extracted from the defective product estimation images. Furthermore, the images are searched for the features, and the presence/absence of the defects in the to-be-inspected objects is determined. Accordingly, the defective product is accurately detected from the to-be-inspected objects.

In the first aspect, as the acquired images are accumulated with progress of inspection, the number of the defective product estimation images obtained in the first sorting step increases, and the number of the features of the defects extracted in the second sorting step increases automatically. Therefore, by inspecting many to-be-inspected objects, the accuracy of detecting the defective product is easily improved.

The appearance inspection apparatus according to the second aspect includes the first sorting unit using the algorithm of the one class learning, and the second sorting unit using the algorithm of the object detection. The first sorting unit sorts each of the images acquired by the imaging unit, as the non-defective product estimation image or the defective product estimation image. The second sorting unit extracts the features of the defects from the defective product estimation images. Furthermore, the second sorting unit searches the images for the features, and determines the presence/absence of the defects in the to-be-inspected objects. Accordingly, the defective product is accurately detected from the to-be-inspected objects.

In the second aspect, as the acquired images are accumulated with progress of inspection, the number of the defective product estimation images obtained by the first sorting unit increases, and the number of the features of the defects extracted by the second sorting unit increases automatically. Therefore, by inspecting many to-be-inspected objects, the accuracy of detecting the defective product is easily improved.

### BRIEF DESCRIPTION OF THE DRAWINGS

FIG. 1 is a flowchart showing an example of a processing procedure of an embodiment of the appearance inspection method according to the first aspect;
FIG. 2 is a block diagram showing a schematic configuration of the appearance inspection apparatus according to the second aspect;
FIG. 3 is a block diagram showing a schematic configuration of a calculation unit in FIG. 2;
FIG. 4 shows an example of a learning model generated by deep learning;
FIG. 5 shows examples of a defect detected in a second sorting step in FIG. 1;
FIG. 6 shows an imaging area of a tire imaged by a camera in FIG. 2; and
FIG. 7 shows an image converted into a band shape.

### DESCRIPTION OF THE PREFERRED EMBODIMENTS

Hereinafter, an embodiment of the present invention will be described with reference to the drawings.

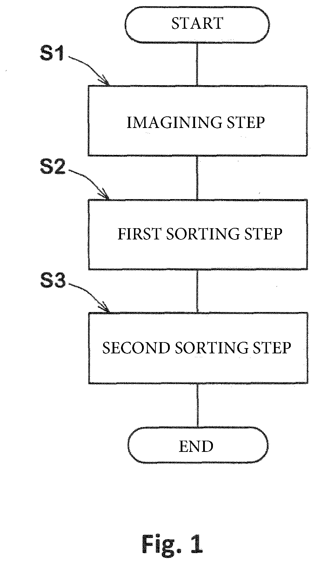

FIG. 1 shows an example of a processing procedure of an embodiment of the appearance inspection method according to the first aspect. The appearance inspection method is a method for inspecting the appearance of a to-be-inspected object. Inspecting the appearance of the to-be-inspected object is to determine whether a defect (abnormality) has occurred in the appearance of the to-be-inspected object. The appearance inspection method is performed, for example, in combination with or instead of visual inspection by an operator.

The to-be-inspected object is not particularly limited. In the present embodiment, industrial products such as tires are used as the to-be-inspected object. In this case, the appearance inspection method according to the first aspect is performed at a production line for the industrial products. A product whose appearance is determined to be defective is discarded without being shipped, or is repaired for the defect and then shipped.

Hereinafter, inspection of the appearance of tires will be described, but the description can be applied to inspection of the appearance of other industrial products, by replacing the tires with the industrial products.

The appearance inspection method includes an imaging step S1, a first sorting step S2, and a second sorting step S3. The appearance inspection method is executed using an appearance inspection apparatus 1. The appearance inspection apparatus 1 is an apparatus for inspecting the appearance of a to-be-inspected object.

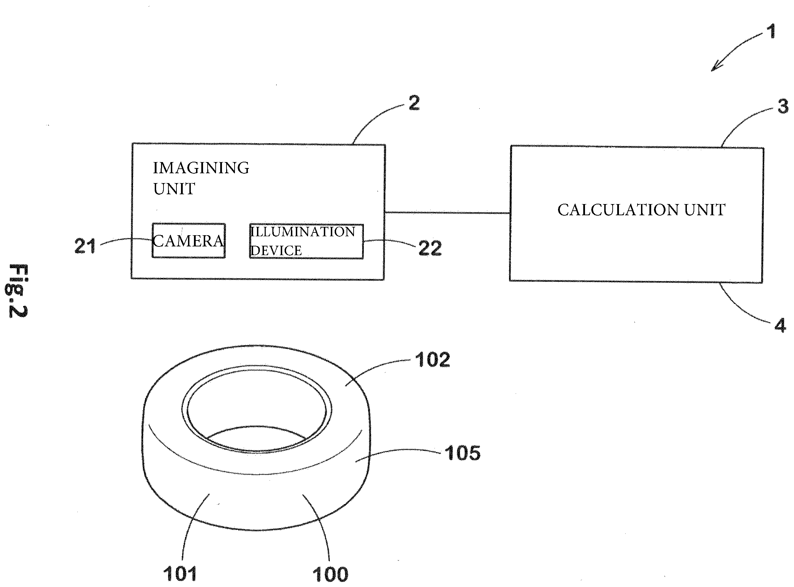

FIG. 2 shows a schematic configuration of the appearance inspection apparatus 1. The appearance inspection apparatus 1 is an apparatus for inspecting the appearance of a to-be-inspected object. The appearance inspection apparatus 1 includes an imaging unit 2 and a calculation unit 3. For example, a computer device 4 is used as the calculation unit 3.

The imaging unit 2 includes a camera 21 including an imaging device such as a charge coupled device (CCD) or a complementary metal oxide semiconductor (CMOS). The camera 21 images a plurality of tires 101 as to-be-inspected objects 100 and acquires images thereof. More specifically, the camera 21 converts, for example, light reflected by the tire 101, into an electric signal and acquires electronic data of the image. The image data acquired by the camera 21 is transmitted to the computer device 4 and stored therein.

The imaging unit 2 is provided with an illumination device 22 for illuminating the tire 101, which is a subject of the camera 21, as required. In addition, the imaging unit 2 is provided with a device (not shown) for positioning and rotating the conveyed tire 101. The camera 21, the illumination device 22, the above-described device, and the like are controlled, for example, by the computer device 4.

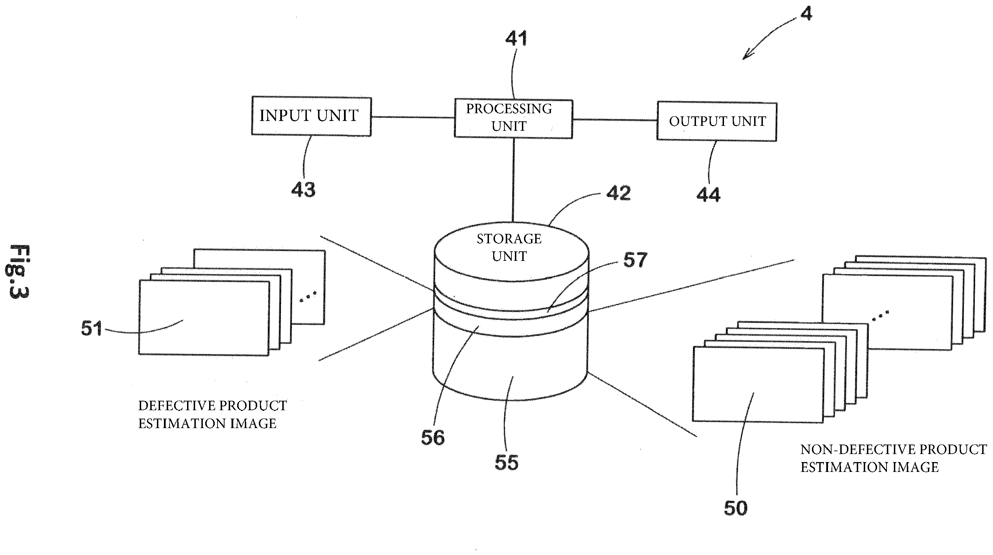

FIG. 3 shows a schematic configuration of the computer device 4. The computer device 4 includes a processing unit 41 that executes various kinds of arithmetic processing and information processing, a storage unit 42 in which a program for controlling operation of the processing unit 41 and various kinds of information are stored, an input unit 43 for inputting various commands and various kinds of information to the processing unit 41, an output unit 44 for outputting results of processing by the processing unit 41, etc. The processing unit 41 of the present embodiment also controls the above-described camera 21, the above-described illumination device 22, etc.

The processing unit 41 includes, for example, a central processing unit (CPU) and a memory. In addition to the CPU or instead of the CPU, a graphics processing unit (GPU) that excels in specific data processing may be used in the processing unit 41. For example, a largecapacity hard disk drive is used as the storage unit 42.

A device such as a keyboard and a mouse, and a device that is connected to the imaging unit 2 to receive an input of image data from the imaging unit 2 are used as the input unit 43. A display device such as a liquid crystal display (LCD) is used as the output unit 44.

The computer device 4 may be provided with a communication unit (not shown) for exchanging various kinds of information (for example, information to be used for inspecting the appearance of the tires 101) with another computer device (not shown). For example, the communication unit is connected to the other computer device via a local area network (LAN). In this case, the calculation unit 3 is composed of a network including the computer device 4 and the other computer device.

Hereinafter, a processing procedure of the appearance inspection method, that is, operation of the appearance inspection apparatus 1, will be described with reference to FIGS. 1 to 3.

In the imaging step S1 shown in FIG. 1, the plurality of tires 101 are imaged by the camera 21, and images thereof are acquired as electronic data. The image data acquired in the imaging step S1 is transmitted to the computer device 4 and stored in the storage unit 42 by the processing unit 41.

The first sorting step S2 and the second sorting step S3 are executed by the processing unit 41 of the computer device 4.

In the first sorting step S2, each image acquired in the imaging step S1 is sorted as a non-defective product estimation image 50 or a defective product estimation image 51 using an algorithm of one class learning (One Class Support Vector Machine). The non-defective product estimation image 50 is the image of the tire 101 whose appearance is estimated to be good by the one class learning, and is stored, for example, in a non-defective product image folder 55 of the storage unit 42. On the other hand, the defective product estimation image 51 is the image of the tire 101 whose appearance is estimated not to be good by the one class learning, and is stored, for example, in a defective product image folder 56 of the storage unit 42.

The one class learning is an algorithm for detecting outliers from learning values of non-defective products learned without supervision, and is a method suitable for abnormality inspection of industrial products, such as the tires 101, the majority of which are non-defective products. In the present embodiment, for example, the learning values are acquired by learning image data of non-defective tires. For learning image data, for example, a method of deep learning is used.

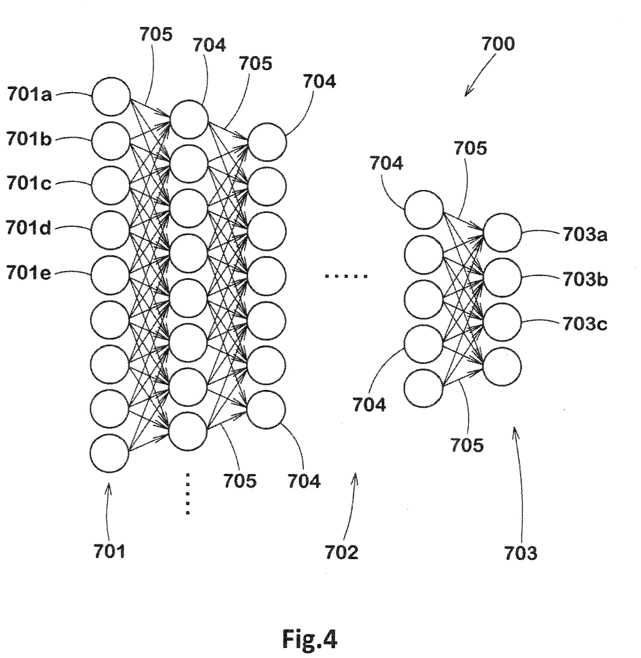

FIG. 4 shows an example of a learning model generated by deep learning. In the present embodiment, a learning model 700 is generated by calculation of the processing unit 41 and stored in the storage unit 42. The learning model 700 may be, for example, generated by calculation of another computer device outside the computer device 4, inputted into the computer device 4, and stored in the storage unit 42.

The learning model 700 is defined, for example, by an intermediate layer 702 generated by machine learning using image data 701a, 701b, 701c, 701d, 701e ... of a plurality of non-defective tires as an input layer 701 and learning values 703a, 703b, 703c ... of the non-defective products as an output layer 703.

The intermediate layer 702 of the present embodiment includes a combination of a plurality of neurons (nodes) 704 hierarchized in multiple stages and optimized weighting factors 705 (parameters). The respective neurons 704 are connected by the weighting factors 705. Such an intermediate layer 702 is referred to as a convolutional neural network. That is, the learning model 700 of the present embodiment includes a convolutional neural network.

In the first sorting step S2, outliers from the learning values 703a, 703b, 703c ... of the non-defective products are detected by using the one class learning, and thus new (unlearned) defects that are difficult to assume can also be detected. Therefore, it is possible to easily collect various types of defective product estimation images 51.

In the second sorting step S3, the tire 101 that is a defective product is detected by using an algorithm of object detection. The object detection is an algorithm for detecting an object (a defect in the present embodiment) in an image of a to-be-inspected object. For example, a learning model including a convolutional neural network is used in the object detection.

In the second sorting step S3 of the present embodiment, the image data acquired in the imaging step S1 is searched for features of defects. The features of the defects are sorted in the first sorting step S2 and extracted from the defective product estimation images 51 stored in the storage unit 42. That is, the processing unit 41 extracts features of defects from the defective product estimation images 51 and, for example, stores the features of the defects in a defect folder 57 of the storage unit 42. The extracted features of the defects include features that cannot be understood by humans due to the convolution processing. Then, the processing unit 41 searches the image data for defects by comparing the image data acquired in the imaging step S1 with the features of the defects, and detects a defective product from the imaged tires 101. That is, if a defect exists in the image data, the tire 101 from which the image data is acquired is determined to be a defective product.

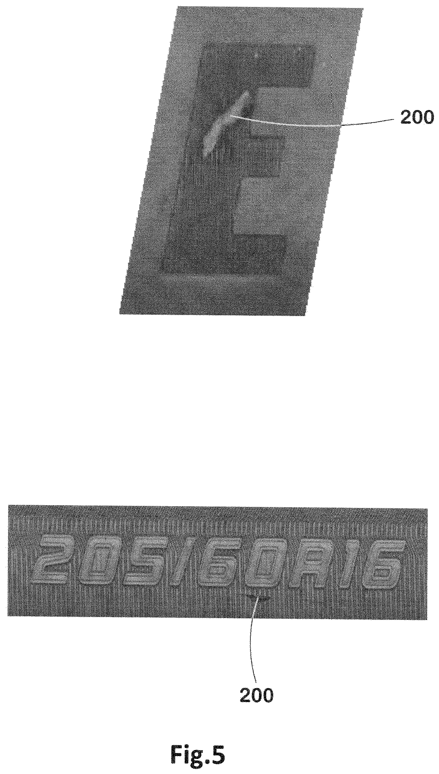

FIG. 5 shows examples of a defect 200 detected in the second sorting step S3. In the example, a defect 200 that occurs at a part of a sidewall portion 102 (see FIG. 2) of the tire 101 is shown.. In FIG. 5, occurrence of the defect 200 on the appearance due to poor rubber flow or the like at a character "E" formed on the surface of the sidewall portion 102 is confirmed. In addition, occurrence of a similar defect 200 near an indication "205/60R16" indicating the tire size is also confirmed. According to the present embodiment, not only the defects 200 shown in FIG. 5 but also defects such as foreign matter mixed into the sidewall portion 102 can be detected.

As for industrial products such as the tires 101, the majority of the products are usually non-defective products, and the frequency of occurrence of defective products is low. Therefore, it is generally difficult to collect features of various defects 200 and store the features in the storage unit 42. However, in the present embodiment, as the images captured by the camera 21 in the imaging step S1 are accumulated with progress of inspection, the number of defective product estimation images 51 obtained in the first sorting step S2 increases, and the number of features of defects 200 extracted in the second sorting step S3 and accumulated in the storage unit 42 also increases. Therefore, by inspecting many tires 101, the accuracy of detecting a defective product is easily improved.

In the present embodiment, in the first sorting step S2, the processing unit 41 serves as a first sorting unit that sorts images acquired by the camera 21 as non-defective product estimation images 50 and defective product estimation images 51 by using the algorithm of the one class learning. In addition, in the second sorting step S3, the processing unit 41 serves as a second sorting unit that detects a defective product from the tires 101 imaged by the camera 21, by using the algorithm of the object detection. That is, the first sorting unit and the second sorting unit are realized by the processing unit 41 and software or the like that controls operation of the processing unit 41. The algorithm of the one class learning and the algorithm of the object detection can also be introduced by using known software.

In the second sorting step S3, the features of the defects 200 are preferably classified and accumulated for each of the types thereof (for example, the above-described poor rubber flow, mixing of foreign matter, etc.). In the present embodiment, the features of the defects 200 are classified by the processing unit 41 (second sorting unit) and accumulated in the defect folder 57 of the storage unit 42 for each type. By comparing the image data acquired in the imaging step S1 using the features of the defects 200 classified by type, the accuracy of detecting a defective product is further improved.

In the second sorting step S3, not only the defective product estimation images 51 but also the non-defective product estimation images 50 are preferably compared with the features of the defects 200. In this case, the tires 101 determined to be non-defective products in the first sorting step S2 are also searched for the defects 200 in the second sorting step S3, so that the accuracy of detecting a defective product is improved. In addition, the tire 101 determined to be a defective product in the first sorting step S2 and the second sorting step S3 may be handled as a defective product, and the tire 101 determined to be a defective product in the first sorting step S2 or the second sorting step S3 may be handled as a defective product.

In these cases, the features of the defects 200 extracted from the images of the tires 101 that are detected as defective products in the second sorting step S3 after being sorted as non-defective product estimation images in the first sorting step S2 may be accumulated in the defect folder 57. With such a configuration, an even wider variety of features of defects 200 are accumulated in the defect folder 57, so that the accuracy of detecting a defective product is further improved.

Meanwhile, the images of the tires 101 determined to be non-defective products in the second sorting step S3 may be added to images of non-defective tires in the one class learning of the first sorting step S2. With such a configuration, the accuracy of sorting images in the first sorting step S2 is further improved.

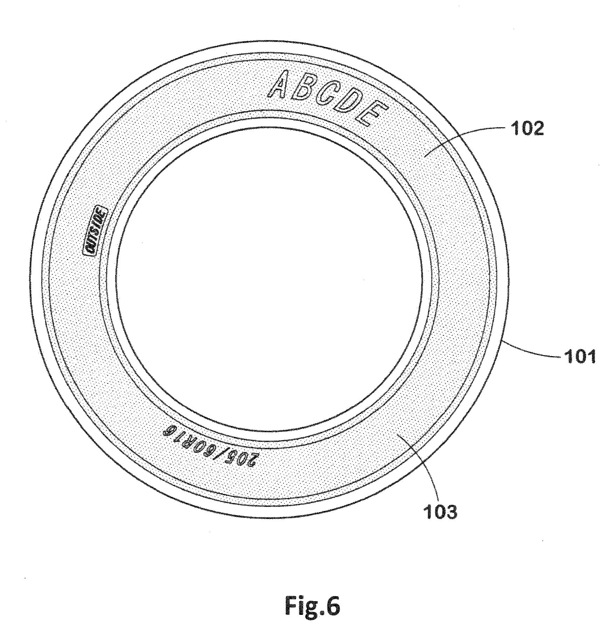

FIG. 6 shows an imaging area 103 of the tire 101 imaged by the camera 21. In FIG. 6, the imaging area 103 is drawn by hatching with a dot pattern. In the present embodiment, in the imaging step S1, the annular imaging area 103 at the sidewall portion 102 of the tire 101 is imaged. Accordingly, the presence/absence of an appearance defect at the sidewall portion 102 of the tire 101 is easily inspected. In this case, in the imaging step S1, the annular imaging area 103 is preferably converted into a band shape.

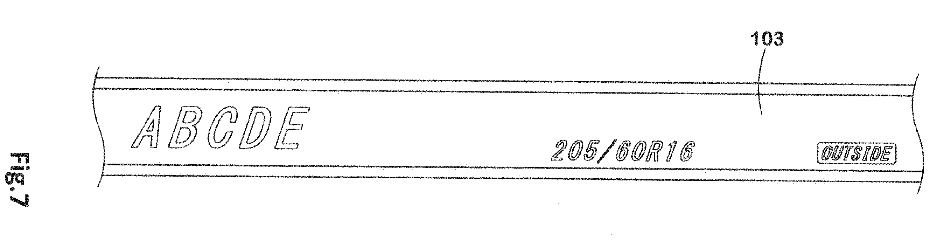

FIG. 7 shows an image of the sidewall portion 102 converted into a band shape. The conversion of the image is executed by the processing unit 41, and the converted image is stored in the storage unit 42. Since the annular image is converted into a band shape in the imaging step S1, it is easy to scroll the image on the display device, and an operator can easily check an appearance defect.

In the imaging step S1, a uniformity peak mark, a light dot mark, etc., that are put on the sidewall portion 102 are preferably subjected to a masking process. In the present embodiment, in the case where the to-be-inspected object 100 is the tire 101, areas corresponding to the peak mark, the light dot mark, and the like in an image captured by the camera 21 are masked by painting in the same color as the tire 101 itself, for example, in black. These marks are portions peculiar in terms of color but not defects of the tire 101, and thus it is not desirable to detect the marks as abnormalities. Therefore, in the present embodiment, by performing the masking process, the presence of the marks in the image is ignored in the first sorting step S2 and the second sorting step S3, so that false detection of a defective product is inhibited.

Meanwhile, in the present embodiment, the position of the camera 21 may be changed such that a tread portion 105 (see FIG. 2) of the tire 101 is imaged. With such a configuration, it is also possible to inspect the presence/absence of an appearance defect at the tread portion 105.

A 2D camera, a 3D camera, or a 2D camera and a 3D camera are used as the camera 21. With a 2D camera, in the first sorting step S2 and the second sorting step S3, the defect 200 is detected mainly in terms of abnormality relating to color. Meanwhile, with a 3D camera, in the first sorting step S2 and the second sorting step S3, the defect 200 is detected mainly in terms of abnormality relating to shape. By using both cameras in combination, the defect 200 is detected in terms of abnormality relating to color and shape.

Although the appearance inspection method, etc., according to the present invention have been described in detail above, the present invention is not limited to the above specific embodiments, and various modifications can be made to implement the present invention.

## Claims

1. An appearance inspection method for inspecting appearance of a to-be-inspected object (100), the appearance inspection method being executed using an appearance inspection apparatus (1) and comprising:
an imaging step (S1) of imaging a plurality of the to-be-inspected objects (100) using a camera (21) of an imaging unit (2) and acquiring images thereof;
a first sorting step (S2) of sorting the images as non-defective product estimation images (50) within a predetermined standard and defective product estimation images (51) outside the standard by using an algorithm of one class learning, the first sorting step (S2) being executed using a processing unit (41) of a computer device (4); and
a second sorting step (S3) of detecting a defective product from the to-be-inspected objects (100) by extracting features of defects (200) from the defective product estimation images (51) using an algorithm of object detection, and searching the images for the features by comparing the image data acquired in the imaging step (S1) with the features of the defects (200) from the defective product estimation images (51) sorted in the first sorting step (S2), the second sorting step (S3) being executed using the processing unit (41).

2. The appearance inspection method according to claim 1, wherein, in the second sorting step (S3), the features are classified and accumulated for each of types of the defects (200).

3. The appearance inspection method according to claim 1 or 2, wherein, in the second sorting step (S3), the feature extracted from the image of the to-be-inspected object (100) detected as the defective product in the second sorting step (S3) after being sorted as the non-defective product estimation image (50) in the first sorting step (S2) is accumulated.

4. The appearance inspection method according to any one of claims 1 to 3, wherein the to-be-inspected objects (100) are tires (101).

5. The appearance inspection method according to claim 4, wherein an annular imaging area (103) at a sidewall portion (102) is imaged in the imaging step (S1).

6. The appearance inspection method according to claim 5, wherein the imaging area (103) is converted into a band shape in the imaging step (S1).

7. An appearance inspection apparatus (1) for inspecting appearance of a to-be-inspected object (100), the appearance inspection apparatus (1) comprising:
an imaging unit (2) configured to image a plurality of the to-be-inspected objects (100) and acquire images thereof;
a storage unit (42) configured to store the images;
a first sorting unit (41) configured to sort the images as non-defective product estimation images (50) within a predetermined standard and defective product estimation images (51) outside the standard by using an algorithm of one class learning; and
a second sorting unit (41) configured to detect a defective product from the to-be-inspected objects (100) by extracting features of defects (200) from the defective product estimation images (51) using an algorithm of object detection, and searching the images for the features by comparing the image data acquired by the imaging unit (2) with the features of the defects (200) from the defective product estimation images (51) sorted by the first sorting unit (41).

8. The appearance inspection apparatus (1) according to claim 7, wherein
the second sorting unit (41) classifies the features by types of the defects (200), and
the storage unit (42) accumulates the features for each of the types.

9. The appearance inspection apparatus (1) according to claim 7 or 8, wherein the imaging unit (2) includes a 2D camera (21).

10. The appearance inspection apparatus (1) according to any one of claims 7 to 9, wherein the imaging unit (2) includes a 3D camera (21).

## Patentansprüche

1. Erscheinungsbild-Prüfverfahren zum Prüfen des Erscheinungsbildes eines zu prüfenden Objekts (100), wobei das Erscheinungsbild-Prüfverfahren unter Verwendung einer Erscheinungsbild-Prüfvorrichtung (1) ausgeführt wird und umfasst:
einen Abbildungsschritt (S1) des Abbildens einer Vielzahl der zu prüfenden Objekte (100) unter Verwendung einer Kamera (21) einer Abbildungseinheit (2) und des Erfassens von Bildern davon;
einen ersten Sortierschritt (S2) des Sortierens der Bilder als Nicht-Defekt-Produkt-Einschätzbilder (50) innerhalb eines vorbestimmten Standards und Defekt-Produkt-Einschätzbilder (51) außerhalb des Standards unter Verwendung eines Ein-Klassen-Lernalgorithmus, wobei der erste Sortierschritt (S2) unter Verwendung einer Verarbeitungseinheit (41) einer Computervorrichtung (4) ausgeführt wird; und
einen zweiten Sortierschritt (S3) des Detektierens eines defekten Produkts aus den zu prüfenden Objekten (100) durch Extrahieren von Merkmalen von Defekten (200) aus den Defekt-Produkt-Einschätzbildern (51) unter Verwendung eines Algorithmus der Objektdetektion und Durchsuchen der Bilder nach den Merkmalen durch Vergleichen der im Abbildungsschritt (S1) erfassten Bilddaten mit den Merkmalen der Defekte (200) aus den im ersten Sortierschritt (S2) sortierten Defekt-Produkt-Einschätzbildern (51), wobei der zweite Sortierschritt (S3) unter Verwendung der Verarbeitungseinheit (41) ausgeführt wird.

2. Erscheinungsbild-Prüfverfahren nach Anspruch 1, wobei im zweiten Sortierschritt (S3) die Merkmale für jeden der Typen der Defekte (200) klassifiziert und akkumuliert werden.

3. Erscheinungsbild-Prüfverfahren nach Anspruch 1 oder 2, wobei im zweiten Sortierschritt (S3) das Merkmal, das aus dem Bild des zu prüfenden Objekts (100) extrahiert wird, das im zweiten Sortierschritt (S3) als das defekte Produkt detektiert wird, nachdem es im ersten Sortierschritt (S2) als das Nicht-Defekt-Produkt-Einschätzbild (50) sortiert wurde, akkumuliert wird.

4. Erscheinungsbild-Prüfverfahren nach einem der Ansprüche 1 bis 3, wobei die prüfenden Objekte (100) Reifen (101) sind.

5. Erscheinungsbild-Prüfverfahren nach Anspruch 4, wobei im Abbildungsschritt (S1) ein ringförmiger Abbildungsbereich (103) an einem Seitenwandabschnitt (102) abgebildet wird.

6. Erscheinungsbild-Prüfverfahren nach Anspruch 5, wobei der Abbildungsbereich (103) im Abbildungsschritt (S1) in eine Bandform umgewandelt wird.

7. Erscheinungsbild-Prüfvorrichtung (1) zum Prüfen des Erscheinungsbildes eines zu prüfenden Objekts (100), wobei die Erscheinungsbild-Prüfvorrichtung (1) umfasst:
eine Abbildungseinheit (2), die konfiguriert ist, um eine Vielzahl der zu prüfenden Objekte (100) abzubilden und Bilder davon zu erfassen;
eine Speichereinheit (42), die konfiguriert ist, um die Bilder zu speichern;
eine erste Sortiereinheit (41), die konfiguriert ist, um die Bilder als Nicht-Defekt-Produkt-Einschätzbilder (50) innerhalb eines vorbestimmten Standards und Defekt-Produkt-Einschätzbilder (51) außerhalb des Standards unter Verwendung eines Ein-Klassen-Lernalgorithmus zu sortieren; und
eine zweite Sortiereinheit (41), die konfiguriert ist, um ein defektes Produkt aus den zu prüfenden Objekten (100) durch Extrahieren von Merkmalen von Defekten (200) aus den Defekt-Produkt-Einschätzbildern (51) unter Verwendung eines Algorithmus der Objektdetektion zu detektieren und die Bilder nach den Merkmalen durch Vergleichen der durch die Abbildungseinheit (2) erfassten Bilddaten mit den Merkmalen der Defekte (200) aus den durch die erste Sortiereinheit (41) sortierten Defekt-Produkt-Einschätzbildern (51) zu durchsuchen.

8. Erscheinungsbild-Prüfvorrichtung (1) nach Anspruch 7, wobei
die zweite Sortiereinheit (41) die Merkmale nach Typen der Defekte (200) klassifiziert, und
die Speichereinheit (42) die Merkmale für jeden der Typen akkumuliert.

9. Erscheinungsbild-Prüfvorrichtung (1) nach Anspruch 7 oder 8, wobei die Abbildungseinheit (2) eine 2D-Kamera (21) umfasst.

10. Erscheinungsbild-Prüfvorrichtung (1) nach einem der Ansprüche 7 bis 9, wobei die Abbildungseinheit (2) eine 3D-Kamera (21) umfasst.

## Revendications

1. Procédé d'inspection d'apparence pour inspecter l'apparence d'un objet à inspecter (100), le procédé d'inspection d'apparence étant exécuté à l'aide d'un appareil d'inspection d'apparence (1) et comprenant :
une étape d'imagerie (S1) consistant à imager une pluralité d'objets à inspecter (100) à l'aide d'une caméra (21) d'une unité d'imagerie (2) et à en acquérir des images ;
une première étape de tri (S2) consistant à trier les images en images d'estimation de produit non défectueux (50) dans le cadre d'une norme prédéterminée et en images d'estimation de produit défectueux (51) en dehors de la norme à l'aide d'un algorithme d'apprentissage à une classe, la première étape de tri (S2) étant exécutée à l'aide d'une unité de traitement (41) d'un dispositif informatique (4) ; et
une deuxième étape de tri (S3) consistant à détecter un produit défectueux parmi les objets à inspecter (100) en extrayant des caractéristiques de défauts (200) à partir des images d'estimation de produit défectueux (51) à l'aide d'un algorithme de détection d'objets, et à rechercher les caractéristiques dans les images en comparant les données d'image acquises lors de l'étape d'imagerie (S1) avec les caractéristiques des défauts (200) à partir des images d'estimation de produit défectueux (51) triées lors de la première étape de tri (S2), la deuxième étape de tri (S3) étant exécutée à l'aide de l'unité de traitement (41).

2. Procédé d'inspection d'apparence selon la revendication 1, dans lequel, lors de la deuxième étape de tri (S3), les caractéristiques sont classées et accumulées pour chacun des types de défauts (200).

3. Procédé d'inspection d'apparence selon la revendication 1 ou 2, dans lequel, lors de la deuxième étape de tri (S3), la caractéristique extraite à partir de l'image de l'objet à inspecter (100) détecté comme produit défectueux lors de la deuxième étape de tri (S3) après avoir été trié comme image d'estimation de produit non défectueux (50) lors de la première étape de tri (S2) est accumulée.

4. Procédé d'inspection d'apparence selon l'une quelconque des revendications 1 à 3, dans lequel les objets à inspecter (100) sont des pneus (101).

5. Procédé d'inspection d'apparence selon la revendication 4, dans lequel une zone d'imagerie annulaire (103) au niveau d'une partie de flanc (102) est imagée lors de l'étape d'imagerie (S1).

6. Procédé d'inspection d'apparence selon la revendication 5, dans lequel la zone d'imagerie (103) est convertie en une forme de bande lors de l'étape d'imagerie (S1).

7. Appareil d'inspection d'apparence (1) pour inspecter l'apparence d'un objet à inspecter (100), l'appareil d'inspection d'apparence (1) comprenant :
une unité d'imagerie (2) configurée pour imager une pluralité d'objets à inspecter (100) et en acquérir des images ;
une unité de stockage (42) configurée pour stocker les images ;
une première unité de tri (41) configurée pour trier les images en images d'estimation de produit non défectueux (50) dans le cadre d'une norme prédéterminée et en images d'estimation de produit défectueux (51) en dehors de la norme à l'aide d'un algorithme d'apprentissage à une classe ; et
une deuxième unité de tri (41) configurée pour détecter un produit défectueux parmi les objets à inspecter (100) en extrayant des caractéristiques de défauts (200) à partir des images d'estimation de produit défectueux (51) à l'aide d'un algorithme de détection d'objets, et en recherchant les caractéristiques dans les images en comparant les données d'image acquises par l'unité d'imagerie (2) avec les caractéristiques des défauts (200) à partir des images d'estimation de produit défectueux (51) triées par la première unité de tri (41).

8. Appareil d'inspection d'apparence (1) selon la revendication 7, dans lequel
la deuxième unité de tri (41) classe les caractéristiques par types de défauts (200), et
l'unité de stockage (42) accumule les caractéristiques pour chacun des types.

9. Appareil d'inspection d'apparence (1) selon la revendication 7 ou 8, dans lequel l'unité d'imagerie (2) inclut une caméra 2D (21).

10. Appareil d'inspection d'apparence (1) selon l'une quelconque des revendications 7 à 9, dans lequel l'unité d'imagerie (2) inclut une caméra 3D (21).
